(19) Europäisches Patentamt
European Patent Office
Office européen des brevets

(11) **EP 4 804 269 A1**

(12) **EUROPEAN PATENT APPLICATION**
published in accordance with Art. 153(4) EPC

(43) Date of publication:
**09.09.2026 Bulletin 2026/37**

(21) Application number: **24885632.0**

(22) Date of filing: **25.10.2024**

(51) International Patent Classification (IPC):
***H01M 10/052*** *(2010.01)* ***H01M 4/36*** *(2006.01)*
***H01M 4/38*** *(2006.01)* ***H01M 4/62*** *(2006.01)*
***H01M 4/134*** *(2010.01)* ***H01M 10/0568*** *(2010.01)*
***H01M 10/0569*** *(2010.01)*

(52) Cooperative Patent Classification (CPC):
**H01M 4/134; H01M 4/36; H01M 4/38; H01M 4/62; H01M 10/052; H01M 10/0568; H01M 10/0569;**
Y02E 60/10

(86) International application number:
**PCT/JP2024/038241**

(87) International publication number:
**WO 2025/094859 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.10.2023 JP 2023185501**

(71) Applicant: **Panasonic Energy Co., Ltd.**
**Moriguchi-shi, Osaka 570-8511 (JP)**

(72) Inventor: **SHIBATA, Sho**
**Kadoma-shi, Osaka 571-0057 (JP)**

(74) Representative: **Novagraaf International SA**
**Chemin de l'Echo 3**
**1213 Onex, Geneva (CH)**

# (54) NONAQUEOUS ELECTROLYTE SECONDARY BATTERY

(57) A non-aqueous electrolyte secondary battery (10) disclosed herein includes a positive electrode (11), a negative electrode (12) that includes a negative electrode mixture layer, and a non-aqueous electrolyte. The negative electrode mixture layer contains the negative electrode active material and the binder component. The binder component includes a binder compound and a chelating agent. The negative electrode active material includes a silicon-containing material. The non-aqueous electrolyte contains the polyvalent cation.

*FIG. 1*

10
24
23
25
22
26
16
15
27
19
22
21
17
11
12
13
14
20
18



Processed by Luminess, 75001 PARIS (FR)

## Description

[Technical Field]

The present disclosure relates to a non-aqueous electrolyte secondary battery.

[Background Art]

Non-aqueous electrolyte secondary batteries are used as high-capacity secondary batteries in a variety of applications. Conventionally, various proposals have been made regarding non-aqueous electrolyte secondary batteries. For example, it has been proposed to use materials containing silicon as a negative electrode active material.

Claim 1 of PTL 1 (Japanese Translation of PCT Application No. 2012-527069) discloses "An electrode for a lithium ion rechargeable battery cell comprising:

a substrate, e.g. a current collector;
particulate silicon forming active material in the electrode;
a cellulose based binder; and
at least one chelating agent capable of binding to the metallic impurities, e.g. divalent and/or trivalent impurities;
the binder being mixed with the silicon particles to form a cohesive mass that adheres to the substrate".

Claim 1 of PTL 2 (Japanese Laid-Open Patent Publication No. 2021-77545) discloses "A composition for production of a negative electrode, comprising: a silicon-containing negative electrode active material; an aqueous binding agent; water; and a water-soluble reducing agent".

NPL 1 (App. Sur. Sci., 447 (2018), pp 442-451, "Influence of EDTA in poly(acrylic acid) binder for enhancing electrochemical performance and thermal stability of silicon anode") discloses an influence of EDTA on polyacrylic acid (binder) in a negative electrode containing silicon.

NPL 2 (Mater. Today Sus., 19 (2022), 100178, "Cross-linked binder enables reversible volume changes of Si-based anodes from sustainable photovoltaic waste silicon") discloses an influence of a cross-linked binder on the volume change of a negative electrode containing silicon.

[Citation List]

[Patent Literature]

PTL 1: Japanese Translation of PCT Application No. 2012-527069
PTL 2: Japanese Laid-Open Patent Publication No. 2021-77545

[Non-Patent Literature]

NPL 1: App. Sur. Sci., 447 (2018), pp 442-451
NPL 2: Mater. Today Sus., 19 (2022), 100178

[Summary of Invention]

[Technical Problem]

The materials containing silicon can increase the capacity, whereas they have a problem of large expansion and contraction during charge and discharge. If a negative electrode largely expands during charge, the battery characteristics (e.g., charge-discharge cycle characteristics) significantly deteriorate. It is an object of the present disclosure to provide a non-aqueous electrolyte secondary battery in which a negative electrode active material containing silicon is used and the expansion of the negative electrode during charge is suppressed.

[Solution to Problem]

An aspect of the present disclosure relates to a non-aqueous electrolyte secondary battery including:

a positive electrode;
a negative electrode that includes a negative electrode mixture layer; and
a non-aqueous electrolyte,
wherein the negative electrode mixture layer contains a negative electrode active material and a binder component,
the binder component includes a binder compound and a chelating agent,
the negative electrode active material includes a silicon-containing material, and
the non-aqueous electrolyte contains a polyvalent cation.

[Advantageous Effects of Invention]

With the present disclosure, obtained is a non-aqueous electrolyte secondary battery in which a negative electrode active material containing silicon is used and the expansion of the negative electrode during charge is suppressed.
While novel features of the present invention are set forth particularly in the appended claims, the present invention, both as to organization and content, will be better understood and appreciated, along with other objects and features thereof, from the following detailed description taken in conjunction with the drawings.

[Brief Description of Drawings]

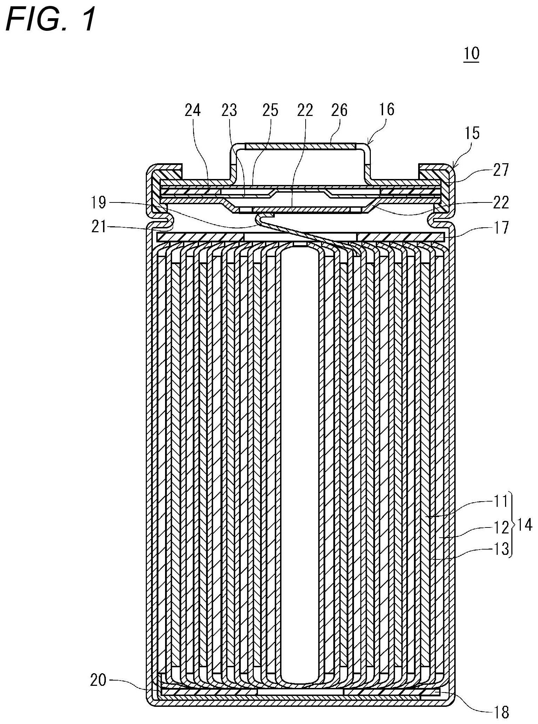

FIG. 1 is a schematic cross-sectional view of an example of a non-aqueous electrolyte secondary battery according to the present disclosure.

[Description of Embodiments]

Although embodiments according to the present disclosure will be described below using examples, the present disclosure is not limited to the examples described below. Although specific numerical values and materials may be mentioned as examples in the following description, other numerical values and materials may be used as long as effects of the present disclosure can be obtained. The wording "numerical value A to numerical value B" as used herein encompasses the numerical value A and the numerical value B and can be read as "numerical value A or more and numerical value B or less". In the following description, when lower limits and upper limits of numerical values regarding specific physical properties, conditions, or the like are given as examples, any of the above-mentioned lower limits and any of the above-mentioned upper limits can be combined, as long as the lower limit is not greater than or equal to the upper limit. In the following description, when examples of constituent elements or examples of methods are listed, only one of the listed examples may be used or two or more of the listed examples may be used in combination, unless otherwise stated.

(Non-Aqueous Electrolyte Secondary Battery)

A non-aqueous electrolyte secondary battery according to this embodiment may be referred to as a "non-aqueous electrolyte secondary battery (B)" or "secondary battery (B)" hereinafter. The secondary battery (B) includes a positive electrode, a negative electrode that includes a negative electrode mixture layer, and a non-aqueous electrolyte. The negative electrode mixture layer contains a negative electrode active material and a binder component. The binder component includes a binder compound and a chelating agent. The negative electrode active material includes a silicon-containing material. The non-aqueous electrolyte contains a polyvalent cation.
The negative electrode active material of the secondary battery (B) includes the silicon-containing material, thus making it possible to increase the capacity. The binder component of the secondary battery (B) includes the binder compound and the chelating agent, and the non-aqueous electrolyte contains the polyvalent cation. Selecting a binder compound and a chelating agent makes it possible to form a bond (e.g., hydrogen bond) between the binder compound and the chelating agent. Also, the chelating agent molecules in the negative electrode mixture layer are cross-linked via the polyvalent cations in the non-aqueous electrolyte that has infiltrated into the negative electrode mixture layer. As a result, the compound molecules included in the binder component are firmly cross-linked, and thus the expansion of the negative electrode during charge is suppressed. Therefore, the expansion of the negative electrode of the secondary battery (B) during charge is suppressed despite the use of the negative electrode active material containing silicon (Si). Accordingly, with the secondary battery (B), it is possible to achieve both a high discharge capacity and favorable charge-discharge cycle characteristics.

The binder compound is preferably a compound that forms a bond (e.g., hydrogen bond) with the chelating agent. That is to say, a preferable example of the binder component includes, as the binder compound, a compound that forms a hydrogen bond with the chelating agent.

Examples of a functional group involved in a hydrogen bond include a carbonyl group, a hydroxy group, an amino group, a thiol group, and the like. The carbonyl group may be a carbonyl group in a carboxylic acid group and/or a carboxylate group. In an example in which the chelating agent and the binder compound form a hydrogen bond, at least one of the chelating agent and the binder compound contains the carbonyl group, and the other contains a hydroxy group. In another example in which the chelating agent and the binder compound form a hydrogen bond, each of the chelating agent and the binder compound contains a carboxylic acid group and/or a carboxylate group.

A compound that is commonly used as a binder can be used in the binder compound, but it is preferable that the binder compound includes a compound that forms a bond with the chelating agent. Examples of the type of bond formed between the binder compound and the chelating agent include a covalent bond, an ionic bond, a hydrogen bond, and the like. A preferable example of the binder compound is a compound that forms a hydrogen bond with the chelating agent. Examples of the binder compound include polyacrylic acid, salts of polyacrylic acid, carboxymethyl cellulose, salts of carboxymethyl cellulose, and the like. The weight-average molecular weight of the binder compound may be within the range of 5,000 to 5,000,000 (e.g., the range of 100,000 to 1,000,000).

The binder compound may include at least one selected from the group consisting of polyacrylic acid, salts of polyacrylic acid, carboxymethyl cellulose, and salts of carboxymethyl cellulose. These are used as the binder compound. The binder component may include only polyacrylic acid and/or a salt of polyacrylic acid as the binder compound. Alternatively, the binder component may include only carboxymethyl cellulose and/or a salt of carboxymethyl cellulose as the binder compound. Examples of a cation included in the salt include a lithium ion, a sodium ion, a potassium ion, an ammonium ion, and the like.

The chelating agent may include at least one selected from the group consisting of a carboxylic acid group, a carboxylate group, a phosphonic acid group, and a phosphonate group. The chelating agent may be a carboxylic acid group and/or a carboxylate group. Alternatively, the chelating agent may be a phosphonic acid group and/or a phosphonate group.

The chelating agent may include an ethylenediamine moiety. The ethylenediamine moiety is represented by the formula $=N-CH_2CH_2-N=$. The ethylenediamine moiety forms a coordinate bond with a cation.

The chelating agent may include at least one selected from the group consisting of ethylenediaminetetraacetic acid (EDTA) and ethylenediaminetetraacetates, and may be at least one of them. These chelating agents have four carbonyl groups as functional groups that can form a hydrogen bond with the binder compound, and therefore, these chelating agents are preferable because they enable the binder compound molecules to be more firmly cross-linked compared with chelating agents having two or three functional groups.

The ethylenediaminetetraacetate may be a lithium salt, a sodium salt, a potassium salt, or an ammonium salt. Examples of the ethylenediaminetetraacetate include disodium ethylenediamine-N,N,N',N'-tetraacetate dihydrate, and the like.

The polyvalent cation is a cation having a valence of two or more. Examples of the polyvalent cation include a divalent cation, a trivalent cation, a tetravalent cation, and the like. The polyvalent cation may include at least one selected from the group consisting of $Ca^{2+}$, $Mg^{2+}$, $Ba^{2+}$, $Ge^{2+}$, $Cu^{2+}$, $Ni^{2+}$, $Co^{2+}$, $Sn^{2+}$, $Sr^{2+}$, $Zn^{2+}$, $Pd^{2+}$, $Pt^{2+}$, $Mn^{2+}$, $Mn^{3+}$, $Ti^{3+}$, $Nb^{3+}$, $Bi^{3+}$, $Ce^{3+}$, $Cr^{3+}$, $La^{3+}$, $In^{3+}$, $Rh^{3+}$, $Sb^{3+}$, $Sm^{3+}$, $Dy^{3+}$, $Eu^{3+}$, $Mn^{3+}$, $Fe^{3+}$, $Al^{3+}$, $Hf^{4+}$, $Zr^{4+}$, and $Th^{4+}$. The polyvalent cation may be any one selected from the above group.

The polyvalent cation may include a divalent cation or may be a divalent cation. It is believed that a divalent cation is likely to form a stable cross-linked structure.

The polyvalent cation may include at least one selected from the group consisting of $Ca^{2+}$ and $Mg^{2+}$. The polyvalent cation may be $Ca^{2+}$ or $Mg^{2+}$.

By dissolving, in the non-aqueous electrolyte, a salt from which the polyvalent cation is produced, the non-aqueous electrolyte can contain the polyvalent cation. At least one selected from the group consisting of calcium (II) bis(trifluoromethanesulfonyl)imide and magnesium (II) bis(trifluoromethanesulfonyl)imide may be dissolved in the non-aqueous electrolyte. That is to say, the non-aqueous electrolyte may contain at least one selected from the group consisting of calcium (II) bis(trifluoromethanesulfonyl)imide and magnesium (II) bis(trifluoromethanesulfonyl)imide. These compounds (salts) are preferable because a chloride ion is not produced therefrom. Anions included in these salts are dissolved in the non-aqueous electrolyte in which the salts are dissolved.

The non-aqueous electrolyte may contain at least one selected from the group consisting of ethylene carbonate, ethyl methyl carbonate, dimethyl carbonate, diethyl carbonate, and fluoroethylene carbonate. These constitute non-aqueous solvents. These solvents swell the binder compound and thus spread the polyvalent cations in the non-aqueous electrolyte throughout the domains of the binder compound. Therefore, these solvents are preferable because they can promote the formation of cross-links between the chelating agent molecules in the binder compound.

The silicon-containing material may include composite particles containing a carbon phase and particulate

silicon phases dispersed in the carbon phase.

The average diameter of the silicon phases may be 1 nm or more, 10 nm or more, 100 nm or more, or 500 nm or more. The average diameter of the silicon phases may be 1000 nm or less, 500 nm or less, 100 nm or less, or 10 nm or less. For example, the average diameter of the silicon phases may be 1 nm or more and 1000 nm or less. The particulate silicon phases dispersed in the carbon phase can be considered as silicon particles dispersed in the carbon phase. The average diameter of the particulate silicon phases is measured by observing the cross sections of the composite particles using SEM or TEM. Specifically, the average diameter is determined by determining the arithmetic mean of the maximum diameters of any 100 silicon phases on the cross sections.

The binder component may further include at least one polyacrylic acid-based compound selected from the group consisting of polyacrylic acid and salts of polyacrylic acid. In this case, the ratio Wc/Wp of the mass Wc of the chelating agent in the negative electrode mixture layer to the mass Wp of the polyacrylic acid-based compound in the negative electrode mixture layer may be 0.01 or more, 0.05 or more, 0.10 or more, or 0.20 or more, and 0.50 or less, 0.20 or less, 0.10 or less, or 0.05 or less. For example, the ratio Wc/Wp may be within the range of 0.01 to 0.50. The lower limit and/or the upper limit of this range may be replaced with the above lower limit and/or the above upper limit as long as the lower limit is not greater than or equal to the upper limit.

The concentration of the polyvalent cation in the non-aqueous electrolyte may be 0.001 mol/L or more, 0.005 mol/L or more, 0.01 mol/L or more, 0.1 mol/L or more, or 1.0 mol/L or more, and 20 mol/L or less, 10 mol/L or less, 1.0 mol/L or less, 0.1 mol/L or less, or 0.01 mol/L or less. For example, the concentration of the polyvalent cation may be within the range of 0.001 mol/L to 20 mol/L, 0.005 mol/L to 20 mol/L, 0.01 mol/L to 20 mol/L, 0.1 mol/L to 20 mol/L, or 1.0 mol/L to 20 mol/L. In any of these ranges, the upper limit may be 10 mol/L, 1.0 mol/L, 0.1 mol/L, or 0.01 mol/L as long as the lower limit is not greater than or equal to the upper limit. For example, the concentration of the polyvalent cation may be within the range of 0.005 mol/L to 1.0 mol/L or 0.005 mol/L to 0.01 mol/L. The concentration of the polyvalent cation in the non-aqueous electrolyte may be 0.001 mol/L or more and 20 mol/L or less.

The higher the concentration of the polyvalent cation is, the further promoted the formation of cross-links between the chelating agent molecules in the negative electrode mixture layer is, and it is thus considered that the expansion rate of the polar plate during charge can be further reduced. Meahwhile, the lower the concentration of the polyvalent cation is, the further suppressed an excessive increase in viscosity of the non-aqueous electrolyte is, and it is thus considered that the charge-discharge characteristics of the battery can be improved. For example, setting the concentration of the polyvalent cation to be within the range of 0.005 mol/L to 0.01 mol/L makes it possible to further reduce the expansion rate of the polar plate during charge without significantly reducing the charge capacity.

The ratio Mca/Mch of the number of moles Mca of the polyvalent cation in the non-aqueous electrolyte to the number of moles Mch of the chelating agent in the negative electrode mixture layer may be 1.0 or more or 5.0 or more. The ratio Mca/Mch may be 20 or less, 15 or less, 10 or less, or 5.0 or less. Mca/Mch may be within the range of 1.0 to 20, 5.0 to 15, or 5.0 to 10. For example, when the ratio Mca/Mch is within the range of 5.0 to 10, it is possible to further reduce the expansion rate of the polar plate during charge without significantly reducing the charge capacity. The number of moles Mca of the polyvalent cation in the non-aqueous electrolyte includes the number of moles of the polyvalent cation in the non-aqueous electrolyte that has infiltrated into the electrodes (the positive electrode and the negative electrode) in addition to the number of moles of the polyvalent cation in the non-aqueous electrolyte present outside the electrodes.

The secondary battery (B) preferably satisfies at least one selected from the following conditions (1) to (4), more preferably two or more of them, even more preferably three or more of them, and particularly preferably all of them.

(1) The binder compound and the chelating agent form a hydrogen bond.
(2) The non-aqueous electrolyte contains a divalent cation.
(3) The chelating agent includes an ethylenediamine moiety.
(4) The ratio Mca/Mch of the number of moles Mca of the polyvalent cation in the non-aqueous electrolyte to the number of moles Mch of the chelating agent in the negative electrode mixture layer is within the range of 1.0 to 20.

As for the condition (1), the binder compound and the chelating agent may each independently include one selected from the group consisting of a carboxylic acid group, a carboxylate group, and a hydroxy group. In this case, at least one of the binder compound and the chelating agent may include a hydroxy group. The binder compound may be at least one selected from the group consisting of polyacrylic acid, salts of polyacrylic acid, carboxymethyl cellulose, and salts of carboxymethyl cellulose. For example, the binder compound may be polyacrylic acid and/or a salt of polyacrylic acid, or carboxymethyl cellulose and/or a salt of carboxymethyl cellulose.

As for the condition (2), the non-aqueous electrolyte may contain at least one selected from the group consisting of $Ca^{2+}$ and $Mg^{2+}$. The non-aqueous electrolyte may contain only $Ca^{2+}$ or only $Mg^{2+}$ as the polyvalent cation.

As for the condition (3), the chelating agent may be at least one selected from the group consisting of ethylenediaminetetraacetic acid and ethylenediaminetetraacetates. As for the condition (4), the ratio Mca/Mch may be within the above range.

A non-aqueous electrolyte containing a monovalent cation other than a lithium cation instead of the polyvalent cation can also be used as the non-aqueous electrolyte. However, in this case, the same effects as the effects obtained from the secondary battery (B) are not always obtained.

(Method for Producing Secondary Battery (B))

There is no limitation on a method for producing the secondary battery (B) as long as the essential configuration of the secondary battery (B) is satisfied. The following describes an example of the production method. The items for describing the secondary battery (B) can be applied to the following production method, and therefore, redundant descriptions will be omitted. The items for describing the following production method may also be applied to the secondary battery (B). In the following example, the electrode group includes a separator and the negative electrode includes a negative electrode current collector.

This production method includes a step (i) and a step (ii). The step (i) is a step of producing an electrode group and a non-aqueous electrolyte. The electrode group includes a positive electrode, a negative electrode, and a separator.

The step (i) includes a step (i-a) of forming the negative electrode, and a step (i-b) of forming the positive electrode. There is no limitation on a method for producing the negative electrode, except that the material of the negative electrode includes a specific component, and a known method may be used. In an example of the method for producing the negative electrode, first, a negative electrode slurry is prepared by mixing a negative electrode component and a dispersion medium. Water, alcohol (e.g., ethanol), ether (e.g., tetrahydrofuran), N-methyl-2-pyrrolidone (NMP), a mixed solution thereof, or the like may be used as the dispersion medium. The negative electrode component contains a negative electrode active material (particles of a negative electrode active material) and a binder component, and further contains other components as necessary. The negative electrode active material includes a silicon-containing material.

It is preferable that the negative electrode slurry does not include a polyvalent cation. If the negative electrode slurry contains a chelating agent and a polyvalent cation, the viscosity of the negative electrode slurry will increase, leading to an increase in difficulty of the negative electrode formation or a decrease in the quality of the negative electrode. Even if the negative electrode slurry does not include a polyvalent cation, it is possible to cause the polyvalent cation to be present in the negative electrode mixture layer by adding the polyvalent cation to the non-aqueous electrolyte. In this case, the polyvalent cation in the negative electrode mixture layer is derived from the non-aqueous electrolyte.

Next, a laminate that includes the negative electrode current collector and the negative electrode mixture layer formed on the negative electrode current collector is obtained by applying the negative electrode slurry onto the negative electrode current collector and then drying the negative electrode current collector. Then, the negative electrode is produced by rolling the laminate. The thickness of the negative electrode mixture layer may be 3 μm or more or 5 μm or more, and 200 μm or less or 150 μm or less. The produced negative electrode is cut into a predetermined size as necessary. The negative electrode mixture layer is formed on one or both surfaces of the negative electrode current collector.

There is no limitation on a method for producing the positive electrode, and a known method may be used. For example, the positive electrode can be formed using the same method as the above-described method for forming the negative electrode, except that a positive electrode slurry is used instead of the negative electrode slurry, and a positive electrode current collector is used instead of the negative electrode current collector. The positive electrode slurry can be prepared using a positive electrode active material, an additive, and a dispersion medium.

There is no limitation on the form of the electrode group. For example, the electrode group may be a wound-type electrode group or a stacked-type electrode group. The wound-type electrode group according to an example is formed by winding the positive electrode, the negative electrode, and the separator. At this time, the separator is disposed between the positive electrode and the negative electrode. The stacked-type electrode group according to an example is formed by stacking one or more flat positive electrodes, one or more flat negative electrodes, and one or more flat separators in one direction. At this time, the separator is disposed between the positive electrode and the negative electrode.

The non-aqueous electrolyte can be prepared by, for example, dissolving predetermined components (a salt, an additive, and the like) in a non-aqueous solvent. Using a salt from which the polyvalent cation is produced makes it possible to produce the non-aqueous electrolyte containing the polyvalent cation.

The step (ii) is a step of housing the electrode group and the non-aqueous electrolyte in an exterior body. There is no limitation on a method for conducting the step (ii), and a known method may be used. There is no limitation on the exterior body, and a known exterior body may be used. As described above, the secondary battery (B) can be produced.

There is no particular limitation on constituent elements other than the constituent elements essential for the secondary battery (B), and constituent elements used in known non-aqueous electrolyte secondary batteries may be applied. The following describes examples of the constituent elements of the secondary battery (B). However, the secondary battery (B) is not limited to the examples described below.

The secondary battery (B) includes an exterior body, an electrode group housed in the exterior body, and a non-aqueous electrolyte. The electrode group includes a positive electrode, a negative electrode, and a separator.

(Negative Electrode)

The negative electrode includes a negative electrode mixture layer. The negative electrode may include a negative electrode current collector and the negative electrode mixture layer disposed on the negative electrode current collector. The negative electrode mixture layer contains a negative electrode active material and a binder component, and may further contain other additives as necessary.

There is no particular limitation on the negative electrode current collector, and a known negative electrode current collector may be used. A conductive sheet (e.g., metallic foil) can be used for the negative electrode current collector. For example, a copper foil, a copper alloy foil, a resin sheet (e.g., a polyethylene terephthalate sheet) on which copper is deposited, a stainless steel foil on which copper is deposited, or the like may be used as the negative electrode current collector.

A material capable of reversibly occluding and releasing lithium ions can be used as the negative electrode active material. The negative electrode active material includes a silicon-containing material. The negative electrode active material may include a negative electrode active material other than the silicon-containing material. Examples of the other negative electrode active material include a carbonaceous material, an Sn-containing material, and the like. The negative electrode mixture layer may include only one type of negative electrode active material or two or more types of negative electrode active materials. Examples of the carbonaceous material include graphite, graphitizable carbon (soft carbon), non-graphitizable carbon (hard carbon), and the like.

Examples of the silicon-containing material include silicon oxide, silicon, and a composite material. The composite material may include a plurality of phases selected from a carbon phase, a lithium silicate phase, a silicon phase, and a silicon oxide phase. The composite material according to an example contains a carbon phase and particulate silicon phases dispersed in the carbon phase. The composite material according to another example contains a lithium silicate phase and particulate silicon phases dispersed in the lithium silicate phase.

There is no particular limitation on components (e.g., a conductive material) other than the negative electrode active material and the binder component, and known components may be used. A material that will be described below as an example of a conductive material for the positive electrode mixture layer may be used as the conductive material.

(Positive Electrode)

The positive electrode includes a positive electrode mixture layer. The positive electrode may include a positive electrode current collector and the positive electrode mixture layer disposed on the positive electrode current collector. There is no particular limitation on the positive electrode current collector and the positive electrode mixture layer, and those used in the positive electrode of a known non-aqueous electrolyte secondary battery may be applied.

Examples of the material of the positive electrode current collector include metal materials such as Al, Ti, and Fe. The metal material may be Al, an Al alloy, Ti, a Ti alloy, an Fe alloy, or the like. The Fe alloy may be stainless steel (SUS).

A material capable of reversibly occluding and releasing lithium ions can be used as the positive electrode active material. Examples of the positive electrode active material include composite oxides that include lithium and a metallic element Me other than lithium, transition metal fluorides, polyanions, fluorinated polyanion, transition metal sulfides, and the like. The composite oxide that includes lithium and a metallic element Me may be a lithium-containing transition metal oxide that includes at least a transition metal as the metallic element Me. The lithium-containing transition metal oxide is produced at low cost and has high average discharge voltage, and is thus favorably used as the positive electrode active material.

Examples of the transition metal element included in the lithium-containing transition metal oxide include Sc, Ti, V, Cr, Mn, Fe, Co, Ni, Cu, Y, Zr, W, and the like. The lithium-containing transition metal oxide may include only one type of transition metal element or two or more types of transition metal elements. It is preferable that the lithium-containing transition metal oxide contains at least one element selected from the group consisting of Ni, Co, Mn, and Al.

There is no particular limitation on additives (e.g., a binding agent and a conductive material) other than the positive electrode active material, and known additives may be used. A conductive carbon material may be used as the conductive material. Examples of the conductive carbon material include carbon black, carbon nanotubes, graphite, and the like. Examples of the binding agent include a fluororesin, polyacrylonitrile, a polyimide resin, an acrylic resin, a polyolefin resin, a rubber-like polymer, and the like. Examples of the fluororesin include polytetrafluoroethylene, polyvinylidene fluoride, and the like.

(Separator)

A porous sheet having ion permeability and insulating properties is used as the separator. Examples of the porous sheet include a microporous thin film, a woven fabric, a non-woven fabric, and the like. There is no particular limitation on the material of the separator, and a polymer material may be used. Examples of the polymer material include a

polyolefin resin, a polyamide resin, cellulose, and the like. Examples of the polyolefin resin include polyethylene, polypropylene, an ethylene-propylene copolymer, and the like. The separator may include an additive (e.g., an inorganic filler) as necessary. The thickness of the separator is not particularly limited, and may be 10 μm or more or 15 μm or more, and 30 μm or less or 20 μm or less.

(Non-Aqueous Electrolyte)

A non-aqueous electrolyte having lithium ion conductivity can be used as the non-aqueous electrolyte. The non-aqueous electrolyte contains a non-aqueous solvent and ions (e.g., lithium ions, polyvalent cations, and anions) dissolved in the non-aqueous solvent. The non-aqueous electrolyte may be in the form of a liquid or a gel.

The non-aqueous electrolyte can be prepared by dissolving a lithium salt and a salt of a polyvalent cation in a non-aqueous solvent. A lithium ion and an anion are produced due to the lithium salt dissolving in the non-aqueous solvent. A polyvalent cation and an anion are produced due to the salt of the polyvalent cation dissolving in the non-aqueous solvent.

Examples of the lithium salt include lithium salts of chlorine-containing acids (e.g., $LiClO_4$, $LiAlCl_4$, and $LiB_{10}Cl_{10}$), lithium salts of fluorine-containing acids (e.g., $LiPF_6$, $LiPF_2O_2$, $LiBF_4$, $LiSbF_6$, $LiAsF_6$, $LiCF_3SO_3$, and $LiCF_3CO_2$), lithium salts of fluorine-containing acid imides (e.g., $LiN(FSO_2)_2$, $LiN(CF_3SO_2)_2$, $LiN(CF_3SO_2)(C_4F_9SO_2)$, and $LiN(C_2F_5SO_2)_2$), lithium halides (e.g., LiCl, LiBr, and LiI), and the like. One of these lithium salts may be used alone, or two or more of them may be used in combination. The concentration of the lithium salt in the non-aqueous electrolyte may be 0.5 mol/L or more and 3.5 mol/L or less.

The non-aqueous electrolyte according to an example includes substantially no chloride ions. For example, the concentration of the chloride ion in the non-aqueous electrolyte may be less than 0.001 mol/L (e.g., less than 0.0001 mol/L). The non-aqueous electrolyte that includes substantially no chloride ions is preferable because substantially no chlorine-based gas derived from the chloride ions is generated during the charging and discharging processes. The non-aqueous electrolyte that includes substantially no chloride ions can be prepared using a salt that is not a chloride.

There is no particular limitation on the non-aqueous solvent, and a known non-aqueous solvent may be used. Examples of the non-aqueous solvent include cyclic carbonic acid esters, linear carbonic acid esters, cyclic carboxylic acid esters, linear carboxylic acid esters, and the like. Examples of the cyclic carbonic acid esters include propylene carbonate (PC), ethylene carbonate (EC), fluoroethylene carbonate (FEC), vinylene carbonate (VC), and the like. Examples of the linear carbonic acid esters include dimethyl carbonate (DMC), diethyl carbonate (DEC), ethyl methyl carbonate (EMC), and the like. Examples of the cyclic carboxylic acid esters include γ-butyrolactone (GBL) and γ-valerolactone. Examples of the linear carboxylic acid esters include non-aqueous solvents such as methyl acetate, ethyl acetate, propyl acetate, methyl propionate, and ethyl propionate. One of these non-aqueous solvents may be used alone, or two or more of them may be used in combination.

(Exterior Body)

The electrode group and the non-aqueous electrolyte are housed in the exterior body (battery case). There is no particular limitation on the exterior body, and a known exterior body may be used. The exterior body generally includes an exterior can and a sealing body that seals the opening of the exterior can. The exterior can function as a negative electrode terminal, and the sealing body functions as a positive electrode terminal. The sealing body may include a sealing plate and a gasket.

The following describes an example of the secondary battery (B) according to the present disclosure with reference to the drawing. The above-described constituent elements can be applied to the constituent elements of the example described below. Also, the constituent elements of the example described below can be changed based on the above description. Also, items described below may be applied to the embodiments above. Also, in the example described below, constituent elements that are not essential for the secondary battery (B) according to the present disclosure may be omitted.

(Embodiment 1)

FIG. 1 is a schematic vertical cross-sectional view of an example of a non-aqueous electrolyte secondary battery according to Embodiment 1. A cylindrical non-aqueous electrolyte secondary battery 10 shown in FIG. 1 includes a cylindrical battery case, and an electrode group 14 and a non-aqueous electrolyte (not illustrated) that are housed in the battery case. The electrode group 14 is a wound-type electrode group and includes a positive electrode 11, a negative electrode 12, and a separator 13.

The battery case includes a case body 15 that is a bottomed cylindrical metallic container, and a sealing body 16 that seals the opening of the case body 15. A gasket 27 is disposed between the case body 15 and the sealing body 16. The gasket 27 ensures the airtightness of the battery case. In the case body 15, insulating plates 17 and 18 are disposed at both

ends of the electrode group 14 in the direction of the winding axis. The case body 15 has a stepped portion 21.

The sealing body 16 includes a filter 22, a lower valve body 23, an insulating member 24, an upper valve body 25, and a cap 26. The central portions of the lower valve body 23 and the upper valve body 25 are connected to each other. The insulating member 24 is disposed between the peripheral edge portion of the lower valve body 23 and the peripheral edge portion of the upper valve body 25. The peripheral edge portions of the filter 22 and the lower valve body 23 are connected to each other. The peripheral edge portions of the upper valve body 25 and the cap 26 are connected to each other. The members included in the sealing body 16 except for the insulating member 24 are electrically connected.

The lower valve body 23 is provided with a vent hole. Accordingly, when the internal pressure of the battery case rises due to abnormal heat generation or the like, the upper valve body 25 swells toward the cap 26 and separates from the lower valve body 23. This breaks the electric connection between the lower valve body 23 and the upper valve body 25. When the internal pressure further rises, the upper valve body 25 ruptures, and gas is discharged through the opening formed in the cap 26.

The positive electrode 11 is electrically connected to the cap 26, which functions as the positive electrode terminal, via a positive electrode lead 19. The negative electrode 12 is electrically connected to the case body 15, which functions as the negative electrode terminal, via a negative electrode lead 20.

As described above, the negative electrode 12 includes the negative electrode mixture layer. The negative electrode mixture layer contains the negative electrode active material and the binder component. The non-aqueous electrolyte contains the polyvalent cation.

(Supplementary Notes)

The above description discloses the following technologies.

(Technology 1)

A non-aqueous electrolyte secondary battery including:

a positive electrode;
a negative electrode that includes a negative electrode mixture layer; and
a non-aqueous electrolyte,
wherein the negative electrode mixture layer contains a negative electrode active material and a binder component,
the binder component includes a binder compound and a chelating agent,
the negative electrode active material includes a silicon-containing material, and
the non-aqueous electrolyte contains a polyvalent cation.

(Technology 2)

The non-aqueous electrolyte secondary battery according to technology 1, wherein the binder compound includes at least one selected from the group consisting of polyacrylic acid, salts of polyacrylic acid, carboxymethyl cellulose, and salts of carboxymethyl cellulose.

(Technology 3)

The non-aqueous electrolyte secondary battery according to technology 1 or 2, wherein the chelating agent includes at least one selected from the group consisting of a carboxylic acid group, a carboxylate group, a phosphonic acid group, and a phosphonate group.

(Technology 4)

The non-aqueous electrolyte secondary battery according to any one of technologies 1 to 3, wherein the chelating agent includes an ethylenediamino group.

(Technology 5)

The non-aqueous electrolyte secondary battery according to any one of technologies 1 to 4, wherein the chelating agent includes at least one selected from the group consisting of ethylenediaminetetraacetic acid and ethylenediaminetetraacetates.

(Technology 6)

The non-aqueous electrolyte secondary battery according to any one of technologies 1 to 5, wherein the polyvalent cation includes a divalent cation.

(Technology 7)

The non-aqueous electrolyte secondary battery according to any one of technologies 1 to 6, wherein the polyvalent cation includes at least one selected from the group consisting of $Ca^{2+}$ and $Mg^{2+}$.

(Technology 8)

The non-aqueous electrolyte secondary battery according to any one of technologies 1 to 7, wherein at least one selected from the group consisting of calcium (II) bis(trifluoromethanesulfonyl)imide and magnesium (II) bis(trifluoromethanesulfonyl)imide is dissolved in the non-aqueous electrolyte.

(Technology 9)

The non-aqueous electrolyte secondary battery according to any one of technologies 1 to 8, wherein the non-aqueous electrolyte contains at least one selected from the group consisting of ethylene carbonate, ethyl methyl carbonate, dimethyl carbonate, diethyl carbonate, and fluoroethylene carbonate.

(Technology 10)

The non-aqueous electrolyte secondary battery according to any one of technologies 1 to 9, wherein the silicon-containing material includes composite particles containing a carbon phase and particulate silicon phases dispersed in the carbon phase.

(Technology 11)

The non-aqueous electrolyte secondary battery according to technology 10, wherein an average diameter of the silicon phases is 1 nm or more and 1000 nm or less.

(Technology 12)

The non-aqueous electrolyte secondary battery according to any one of technologies 1 to 11,

wherein the binder compound further includes at least one type of polyacrylic acid-based compound selected from the group consisting of polyacrylic acid and salts of polyacrylic acid, and
a ratio Wc/Wp of a mass Wc of the chelating agent in the negative electrode mixture layer to a mass Wp of the polyacrylic acid-based compound in the negative electrode mixture layer is within a range of 0.01 to 0.50.

(Technology 13)

The non-aqueous electrolyte secondary battery according to any one of technologies 1 to 12, wherein a concentration of the polyvalent cation in the non-aqueous electrolyte is 0.001 mol/L or more and 20 mol/L or less.

(Technology 14)

The non-aqueous electrolyte secondary battery according to any one of technologies 1 to 13, wherein a ratio Mca/Mch of the number of moles Mca of the polyvalent cation in the non-aqueous electrolyte to the number of moles Mch of the chelating agent in the negative electrode mixture layer is within a range of 1.0 to 20.

Examples

The following specifically describes the non-aqueous electrolyte secondary battery according to the present disclosure by use of examples. However, the present disclosure is not limited to the following examples. In these examples, a plurality of test cells having different configurations were produced and evaluated.

(Production of Test Cell A1)

A test cell A1 was produced in accordance with the following procedure.

(1) Production of Negative Electrode NA1

A negative electrode slurry SA1 was prepared by mixing a negative electrode active material, polyacrylic acid (PAA), styrene-butadiene copolymer rubber (SBR), carboxymethyl cellulose (CMC), carbon nanotubes (CNTs), disodium ethylenediamine-N,N,N',N'-tetraacetate dihydrate (EDTA-2Na·$2H_2O$), and a suitable amount of water. Silicon-carbon composite particles (GSS manufactured by Giga Solar Materials Co.) were used as the negative electrode active material. The silicon-carbon composite particles each contain a carbon phase and particulate silicon phases dispersed in the carbon phase. The amounts of PAA, CMC, SBR, CNTs, and EDTA-2Na·$2H_2O$ added with respect to 100 parts by mass of the negative electrode active material were 5 parts by mass, 5 parts by mass, 5 parts by mass, 0.5 parts by mass, and 0.556 parts by mass, respectively.

The negative electrode slurry SA1 was applied to one surface of an electrolytic copper foil (current collector) to form a coating, and thus a laminate of the electrolytic copper foil and the coating was formed. Next, the laminate was punched to a predetermined size (2 cm × 2 cm) and was dried. A negative electrode NA1 that included a negative electrode mixture layer was thus obtained. Initial thicknesses $T(0)_1$ to $T(0)_9$ of the negative electrode mixture layer were measured at nine positions of the produced negative electrode NA1. A lead was attached to the negative electrode NA1.

(2) Production of Counter Electrode

A lithium metal foil was attached to one surface of an electrolytic copper foil (current collector) and was punched to a square shape with sides of 2.5 cm to produce a counter electrode. A lead was attached to the counter electrode.

(3) Preparation of Non-Aqueous Electrolyte EA1

A non-aqueous solvent was obtained by mixing ethylene carbonate (EC), ethyl methyl carbonate (EMC), and dimethyl carbonate (DMC) at EC:EMC:DMC =4:1:15 by volume. $LiPF_6$ was dissolved in the non-aqueous solvent at a concentration of 1.3 mol/L, and calcium (II) bis(trifluoromethanesulfonyl)imide was further dissolved therein at a concentration of 0.005 mol/L. A non-aqueous electrolyte EA1 was thus prepared.

(4) Assembly of Test Cell A1

An electrode group was produced by arranging the negative electrode NA1 and the counter electrode such that they faced each other via a separator. A microporous film made of polyolefin was used as the separator. Next, the electrode group was housed in an exterior body. An exterior body formed using an aluminum laminated sheet was used as the exterior body. Next, the non-aqueous electrolyte EA1 was injected into the exterior body, and then the opening of the exterior body was sealed. At this time, a portion of the lead attached to the negative electrode NA1 and a portion of the lead attached to the counter electrode were exposed from the exterior body. A test cell A1 was thus produced. The test cell A1 was evaluated as follows.

(1) Charge-Discharge Test

The test cell A1 was charged and discharged as follows in a constant-temperature chamber at 25°C. The downtime between the charge and the discharge was set to 20 minutes.

(Charge)

Constant current charging was conducted on the test cell A1 at a current value of 0.1 C (1 C is a current value at which a designed capacity is discharged in 1 hour) until the voltage of the cell reached 0.005 V. The subsequent downtime was set to 20 minutes. Next, constant current charging was conducted at a current value of 0.01 C until the voltage of the cell reached 0.005 V. The subsequent downtime was set to 20 minutes. Furthermore, constant current charging was conducted at a current value of 0.001 C until the voltage of the cell reached 0.005 V.

(Discharge)

Constant current discharging was conducted on the test cell A1 at a current value of 0.1 C until the voltage of the

cell reached 1 V. The subsequent downtime was set to 20 minutes. Next, constant current discharging was conducted at a current value of 0.01 C until the voltage of the cell reached 1 V. The subsequent downtime was set to 20 minutes. Furthermore, constant current discharging was conducted at a current value of 0.001 C until the voltage of the cell reached 1 V.

A charge capacity Ec per unit mass of the negative electrode active material and a discharge capacity Ed per unit mass of the negative electrode active material were determined using the results of the above charge-discharge test and the mass of the negative electrode active material.

(2) Measurement of Expansion of Negative Electrode When Fully Charged

The test cell A1 after the above charge-discharge test was charged as follows in a constant-temperature chamber at 25°C.

Constant current charging was conducted on the test cell A1 at a current value of 0.1 C (1 C is a current value at which a designed capacity is discharged in 1 hour) until the voltage of the cell reached 0.005 V. The subsequent downtime was set to 20 minutes. Next, constant current charging was conducted at a current value of 0.01 C until the voltage of the cell reached 0.005 V. The subsequent downtime was set to 20 minutes. Furthermore, constant current charging was conducted at a current value of 0.001 C until the voltage of the cell reached 0.005 V.

The charged test cell A1 was disassembled, and the negative electrode was removed. Then, thicknesses $T(C)_1$ to $T(C)_9$ of the negative electrode mixture layer at the time of full charge were measured at nine positions that were the same as the positions of the negative electrode at which $T(0)_1$ to $T(0)_9$ were measured. Then, expansion rates $X_1$ to $X_9$ at the time of full charge were calculated using the following formula, and an average expansion rate X (%) of the negative electrode at the time of full charge was determined by determining the arithmetic mean of $X_1$ to $X_9$. As described above, the thickness $T(0)_n$ is the initial thickness of the negative electrode mixture layer.

(Expansion rate $X_n$ [%]) = ((thickness $T(C)_n$) / (thickness $T(0)_n$)) $\times$ 100 (n is an integer from 1 to 9)

Furthermore, an expansion amount Y of the negative electrode during charge per charge capacity was determined using the following formula. As described above, the charge capacity Ec is a charge capacity per unit mass of the negative electrode active material.

(Expansion amount Y [%/(Ah/g)]) = (average expansion rate X - 100) / (charge capacity Ec [Ah/g])

(Production of Test Cells A2 and C1 to C4)

Test cells A2 and C1 to C4 were produced using the same method as the method for producing the test cell A1, except that the negative electrode and/or the non-aqueous electrolyte was changed as shown in Table 1. Negative electrodes NA1 and NC1 to NC3 and non-aqueous electrolytes EA2 and EC1 shown in Table 1 were produced using the following methods.

(1') Production of Negative Electrode NC1

A negative electrode slurry SC1 was produced in the same manner as in the production of the negative electrode slurry SA1, except that EDTA-2Na·$2H_2O$ was not added. At this time, the amounts of PAA, CMC, SBR, and CNTs added with respect to 100 parts by mass of the negative electrode active material were 5 parts by mass, 5 parts by mass, 5 parts by mass, and 0.5 parts by mass, respectively. The negative electrode NC1 was produced in the same manner as in the production of the negative electrode NA1, except that the negative electrode slurry SC1 was used instead of the negative electrode slurry SA1.

(1') Production of Negative Electrode NC2

A negative electrode slurry SC2 was produced in the same manner as in the production of the negative electrode slurry SA1, except that $CaCl_2$ was added. At this time, the amounts of PAA, CMC, SBR, CNTs, EDTA-2Na·$2H_2O$, and $CaCl_2$ added with respect to 100 parts by mass of the negative electrode active material were 5 parts by mass, 5 parts by mass, 5 parts by mass, 0.5 parts by mass, 0.556 parts by mass, and 0.0222 parts by mass, respectively. The negative electrode NC2 was produced in the same manner as in the production of the negative electrode NA1, except that the negative electrode slurry SC2 was used instead of the negative electrode slurry SA1.

(1') Production of Negative Electrode NC3

A negative electrode slurry SC3 was produced in the same manner as in the production of the negative electrode slurry SC2, except that the amount of $CaCl_2$ added with respect to 100 parts by mass of the negative electrode active material was 0.0444 parts by mass. The negative electrode NC3 was produced in the same manner as in the production of the negative electrode NA1, except that the negative electrode slurry SC3 was used instead of the negative electrode slurry SA1.

(3') Preparation of Non-Aqueous Electrolyte EA2

The non-aqueous electrolyte EC1 was prepared in the same manner as in the preparation of the non-aqueous electrolyte EA1, except that the concentration of calcium (II) bis(trifluoromethanesulfonyl)imide was 0.01 mol/L.

(3') Preparation of Non-Aqueous Electrolyte EC1

The non-aqueous electrolyte EC1 was prepared in the same manner as in the preparation of the non-aqueous electrolyte EA1, except that calcium (II) bis(trifluoromethanesulfonyl)imide was not added. That is to say, the salt of the polyvalent cation was not added to the non-aqueous electrolyte EC1.

The same measurement and evaluation as those conducted on the negative electrode NA1 and the test cell A1 were conducted on the produced negative electrodes NA2 and NC1 to NC3 and the produced test cells NA2 and C1 to C4.

The conditions for the production of the test cells and the evaluation results were shown in Table 1. It is preferable that the charge capacity Ec and the discharge capacity Ed are high.

[Table 1]

| Test cell | Negative electrode | Non-aqueous electrolyte | Charge capacity Ec (mAh/g) | Discharge capacity Ed (mAh/g) | Average expansion rate X (%) | Expansion amount Y (%/(Ah/g)) |
|---|---|---|---|---|---|---|
| C1 | NC1 | EC1 | 1717 | 1477 | 157.0 | 33.2 |
| C2 | NA1 | EC1 | 1761 | 1503 | 154.2 | 30.8 |
| C3 | NC2 | EC1 | 1749 | 1507 | 155.1 | 31.5 |
| C4 | NC3 | EC1 | 1719 | 1483 | 151.7 | 30.1 |
| A1 | NA1 | EA1 | 1732 | 1491 | 151.0 | 29.4 |
| A2 | NA1 | EA2 | 1728 | 1486 | 148.8 | 28.2 |

The test cells A1 and A2 are test cells corresponding to the secondary battery (B) according to the present disclosure. The test cells C1 to C4 are comparative examples. As shown in Table 1, the test cell C1 in which the negative electrode and the non-aqueous electrolyte did not contain the polyvalent cation had a high average expansion rate X and a high expansion amount Y. When the test cells C2 to C4 were compared, the average expansion rate X and the expansion amount Y decreased due to the addition of $CaCl_2$ to the negative electrode, and the charge capacity also decreased significantly. Meanwhile, with the test cells A1 and A2 in which the polyvalent cation had been added to the non-aqueous electrolyte, it was possible to achieve both a relatively high charge-discharge capacity and a low expansion amount. Therefore, with the present disclosure, it is possible to obtain a high-capacity non-aqueous electrolyte secondary battery having favorable charge-discharge cycle characteristics.

[Industrial Applicability]

The present disclosure can be applied to a non-aqueous electrolyte secondary battery.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

10: Non-aqueous electrolyte secondary battery, 11: Positive electrode, 12: Negative electrode, 13: Separator, 14: Electrode group

## Claims

1. A non-aqueous electrolyte secondary battery comprising:

    a positive electrode;
    a negative electrode that includes a negative electrode mixture layer; and
    a non-aqueous electrolyte,
    wherein the negative electrode mixture layer contains a negative electrode active material and a binder component,
    the binder component includes a binder compound and a chelating agent,
    the negative electrode active material includes a silicon-containing material, and
    the non-aqueous electrolyte contains a polyvalent cation.

2. The non-aqueous electrolyte secondary battery according to claim 1, wherein the binder compound includes at least one selected from the group consisting of polyacrylic acid, salts of polyacrylic acid, carboxymethyl cellulose, and salts of carboxymethyl cellulose.

3. The non-aqueous electrolyte secondary battery according to claim 1, wherein the chelating agent includes at least one selected from the group consisting of a carboxylic acid group, a carboxylate group, a phosphonic acid group, and a phosphonate group.

4. The non-aqueous electrolyte secondary battery according to any one of claims 1 to 3, wherein the chelating agent includes an ethylenediamino group.

5. The non-aqueous electrolyte secondary battery according to any one of claims 1 to 3, wherein the chelating agent includes at least one selected from the group consisting of ethylenediaminetetraacetic acid and ethylenediaminetetraacetates.

6. The non-aqueous electrolyte secondary battery according to any one of claims 1 to 3, wherein the polyvalent cation includes a divalent cation.

7. The non-aqueous electrolyte secondary battery according to any one of claims 1 to 3, wherein the polyvalent cation includes at least one selected from the group consisting of $Ca^{2+}$ and $Mg^{2+}$.

8. The non-aqueous electrolyte secondary battery according to any one of claims 1 to 3, wherein at least one selected from the group consisting of calcium (II) bis(trifluoromethanesulfonyl)imide and magnesium (II) bis(trifluoromethanesulfonyl)imide is dissolved in the non-aqueous electrolyte.

9. The non-aqueous electrolyte secondary battery according to any one of claims 1 to 3, wherein the non-aqueous electrolyte contains at least one selected from the group consisting of ethylene carbonate, ethyl methyl carbonate, dimethyl carbonate, diethyl carbonate, and fluoroethylene carbonate.

10. The non-aqueous electrolyte secondary battery according to any one of claims 1 to 3, wherein the silicon-containing material includes composite particles containing a carbon phase and particulate silicon phases dispersed in the carbon phase.

11. The non-aqueous electrolyte secondary battery according to claim 10, wherein an average diameter of the silicon phases is 1 nm or more and 1000 nm or less.

12. The non-aqueous electrolyte secondary battery according to any one of claims 1 to 3,

    wherein the binder compound further includes at least one type of polyacrylic acid-based compound selected

from the group consisting of polyacrylic acid and salts of polyacrylic acid, and
a ratio Wc/Wp of a mass Wc of the chelating agent in the negative electrode mixture layer to a mass Wp of the polyacrylic acid-based compound in the negative electrode mixture layer is within a range of 0.01 to 0.50.

**13.** The non-aqueous electrolyte secondary battery according to any one of claims 1 to 3, wherein a concentration of the polyvalent cation in the non-aqueous electrolyte is 0.001 mol/L or more and 20 mol/L or less.

**14.** The non-aqueous electrolyte secondary battery according to any one of claims 1 to 3, wherein a ratio Mca/Mch of the number of moles Mca of the polyvalent cation in the non-aqueous electrolyte to the number of moles Mch of the chelating agent in the negative electrode mixture layer is within a range of 1.0 to 20.

FIG. 1

10
24
23
25
22
26
16
15
27
19
22
21
17
11
12
14
13
20
18

**INTERNATIONAL SEARCH REPORT**

International application No.
**PCT/JP2024/038241**

**A. CLASSIFICATION OF SUBJECT MATTER**

***H01M 10/052***(2010.01)i; ***H01M 4/36***(2006.01)i; ***H01M 4/38***(2006.01)i; ***H01M 4/62***(2006.01)i; ***H01M 4/134***(2010.01)i; ***H01M 10/0568***(2010.01)i; ***H01M 10/0569***(2010.01)i
FI: H01M10/052; H01M10/0568; H01M10/0569; H01M4/62 Z; H01M4/38 Z; H01M4/36 A; H01M4/134

According to International Patent Classification (IPC) or to both national classification and IPC

**B. FIELDS SEARCHED**

Minimum documentation searched (classification system followed by classification symbols)

H01M10/05-10/0587; H01M4/00-4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2012-527069 A (NEXEON LTD.) 01 November 2012 (2012-11-01) claims 1-2, 5, 7, paragraphs [0026], [0032]-[0033] | 1-14 |
| A | JP 2019-3800 A (HITACHI CHEMICAL COMPANY, LTD.) 10 January 2019 (2019-01-10) claims 1-3, paragraphs [0005], [0008], [0014], [0017] | 1-14 |
| A | JP 2004-63123 A (JAPAN STORAGE BATTERY CO., LTD.) 26 February 2004 (2004-02-26) claim 1, paragraphs [0023], [0029], [0032], examples | 1-14 |
| A | JP 2016-167353 A (TOYOTA JIDOSHA KABUSHIKI KAISHA) 15 September 2016 (2016-09-15) claim 1, paragraph [0042] | 1-14 |
| A | JP 2023-106632 A (FUJIFILM CORPORATION) 02 August 2023 (2023-08-02) claims 1-2, 9-11, paragraphs [0075], [0081], [0121], examples | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 December 2024** | **07 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/038241**

| Patent document cited in search report | Publication date (day/month/year) | Patent family member(s) | Publication date (day/month/year) |
|---|---|---|---|
| JP 2012-527069 A | 01 November 2012 | US 2012/0107688 A1<br>claims 1-2, 5, 7, paragraphs [0039]-[0040], [0046]-[0047]<br>WO 2010/130975 A1<br>CN 102422466 A<br>KR 10-2012-0038931 A | |
| JP 2019-3800 A | 10 January 2019 | (Family: none) | |
| JP 2004-63123 A | 26 February 2004 | (Family: none) | |
| JP 2016-167353 A | 15 September 2016 | (Family: none) | |
| JP 2023-106632 A | 02 August 2023 | WO 2021/210603 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012527069 W
- JP 2021077545 A

### Non-patent literature cited in the description

- *App. Sur. Sci.*, 2018, vol. 447, 442-451
- *Mater. Today Sus.*, 2022, vol. 19, 100178